# EUROPÄISCHE PATENTSCHRIFT

(11) **EP 0 795 398 B1**
(45) Veröffentlichungstag und Bekanntmachung des Hinweises auf die Patenterteilung: **09.10.2002**
(21) Anmeldenummer: 97103513.4
(22) Anmeldetag: 04.03.1997
(51) Int. Cl.: B32B 27/08, B32B 7/08

(54) **Folie zur Beschichtung von nachbearbeitbaren Substraten**
Film for coating of post-processable substrates
Film de revêtement de substrats transformables ultérieurement

(30) Priorität: 14.03.1996 DE 19610028
(43) Veröffentlichungstag der Anmeldung: 17.09.1997
(73) Patentinhaber: Nordenia Deutschland Gronau GmbH, 58599 Gronau (DE); ThyssenKrupp Stahl AG, 47166 Duisburg (DE)
(72) Erfinder: Kiriazis, Leonidas, Dr., 48151 Münster (DE); Feldmann, Reinhold, 33790 Halle (Westf.) (DE); Haumersen, Heinz, 59077 Hamm (DE); Wetter, Albert, 42349 Wuppertal (DE)
(74) Vertreter: Hoffmeister, Helmut, Dr. Dipl.-Phys.

(56) Entgegenhaltungen:
- EP-A- 0 312 305
- EP-A- 0 312 307
- EP-A- 0 522 240

## Beschreibung

Die Erfindung betrifft eine Folie zur permanenten Beschichtung von nachbearbeitbaren Substraten, insbesondere von Blechen und Platten, sowie mit der Folie beschichtete Substrate und ein Verfahren zur Beschichtung eines Substrates.

Glatte und reliefierte Bleche oder Platten werden kunststoffbeschichtet, um die Korrosionsbeständigkeit zu erhöhen und der sichtbaren Oberfläche Glanz, Farbe und gegebenenfalls dreidimensionale Oberflächeneffekte zu verleihen. Weiterhin sollen dem Blech erhöhte Steifigkeit sowie Wärme- und Kältefestigkeit mit einer Beschichtung verliehen werden. Dabei sind neben den genannten wichtige Eigenschaften die zu erzielende Kratzfestigkeit, die mit Härteprüfungen oder standardisierten Testverfahren geprüft werden kann, die Verformungsadaptions- und Tiefziehfähigkeit, die Gleitfähigkeit, die Sterilisierbarkeit und die Beständigkeit gegen von Lebensmitteln (auch verdorbenen) ausgehende Einflüsse, insbesondere Gerüche und Farben.

Als Bleche und Platten kommen insbesondere solche infrage, die im Automobilbau und in der Haushaltsmaschinen-Industrie zum Einsatz kommen. Es handelt sich dabei z.B. um sogenanntes Schwarzblech, verzinktes oder verzinntes Stahlblech, Aluminiumblech oder Blech aus rostfreiem Stahl. Die Bleche können auch phosphatiert oder chromatiert sein.

Die Auswahl an verwendeten Kunststoffen zur Beschichtung derartiger Bleche ist groß. So wurde im zweiten Weltkrieg kalandriertes Hart-PVC zum Beschichten von Schwarzblech anstelle einer Zinkauflage verwendet. Dieses Aufkleben von Hartfolien ist aber nach dem Krieg wieder aufgegeben worden. Auch Polyester-Folien und Folien aus Polyvinylfluorid wurden auf Metall aufgeklebt. In erster Linie erfolgte jedoch eine Beschichtung von Blechen mit Hilfe von Lackiertechniken, wobei die klassischen Verfahrensweisen sind:
Wirbelsintern, z.B. mit LD-PE;
Einbrennen von Alkydharz-Melamin-Lacken, die eine harte Oberfläche bei mäßiger Verformbarkeit ergeben;
Lackbeschichtung mit wärmehärtenden Acrylharzen;
Aufbringen von Vinylchlorid-Mischpolymerisaten als lackartige Lösungen.

Bei den hohen Anforderungen an Fehlerfreiheit und an ein einwandfreiem Aussehen von Industrieprodukten erweisen sich die herkömmlichen Lackierverfahren als relativ ausschußträchtig, d.h., daß trotz aller Sorgfalt bei der Normierung der Verfahren immer noch mit einer hohen Ausschußrate gerechnet werden muß. Beispielsweise sind bei der Herstellung weiß beschichteter Bleche für Haushaltsmaschinen weit über 10 % Auschuß nicht unüblich.

Es wäre daher grundsätzlich von Vorteil, wenn die Bleche mit einer Kunststoff-Folie beschichtet werden können, so daß die Qualitätsüberwachung vereinfacht ist. Für die Erfindung stellt sich die Aufgabe, eine permanente Beschichtung von nachbearbeitbaren Substraten, insbesondere Blechen, mit einer Folie zu ermöglichen, bei der die sich ergebende Beschichtung einer hochwertigen Lackierung gleichwertig ist, wobei die erzielten Produkte insbesondere im Bezug auf Kratzfestigkeit, eine gute Verformungsadaptions- und Tiefziehfähigkeit, auf die Gleitfähigkeit, die Sterilisierbarkeit und die Beständigkeit gegen von Lebensmitteln (auch verdorbenen) ausgehenden Einflüsse hohen Anforderungen genügen müssen.

Diese Aufgabe wird durch eine zur Beschichtung geeignete Folie gelöst, wie sie in den beiliegenden Ansprüchen definiert ist.

Es zeigt sich, daß eine solche Folie mit Hilfe eines Primers und/oder eines Haftvermittlers auf eine gereinigte und staubfreie Substrat-Oberfläche aufgebracht werden kann und anschließend eine einem hochwertigen Lack gleichwertige Beschichtung bildet. Die Oberfläche ist veredelt und weitgehend kratzfest. Sie weist außerdem chemische Beständigkeit gegen schwache Säuren und Laugen sowie gegenüber den üblichen, von Lebensmitteln ausgehenden Einflüssen auf, auch solchen mit starker Färbung, wie Tomatenpüree oder Tee. Die Folie kann sowohl in der Kontaktlage als auch in der Außenlage transparent und/oder pigmentiert sein, wobei außerdem auch eine glänzende oder matte Außenfläche geschaffen werden kann. Die Außenlage kann sowohl von außen als auch von innen bedruckt sein und somit eine entsprechend den Wünschen des Anwenders veränderbare Oberfläche zeigen. Je nach gewählter Dicke und Verarbeitungstemperatur lassen sich auch stark reliefierte Oberflächen beschichten.

Es hat sich gezeigt, daß als Substrat für eine solche Folie sich nicht nur Bleche eignen, sondern auch geschliffene Hölzer, Holzwerkstoffe, Karton oder Papier. Das Substrat kann auch eine Kunststoffoberfläche sein, sogar ein keramischer Werkstoff, beispielsweise gebrannter Ton oder Glas. Auch lassen sich dünn ausgewalzte Metalle beschichten, z.B. eine dünne Aluminium-Folie. Wesentlich ist, daß die Folie gemäß Erfindung auch die üblichen Nachbearbeitungsvorgänge, wie Biegen, Stanzen, Randbeschleifen, Bördeln oder Tiefziehen, in Verbindung mit einem der genannten Substrate verträgt, ohne daß es zu Absplitterungen, Biegerißbildungen und dergleichen kommt. Dabei sind nach fachmännischen Erwägungen die Dicke der Folie, die Bearbeitungsvorgänge und das Substrat aufeinander abzustimmen.

Der vorgenannte Folienaufbau kann in verschiedener Weise variiert werden. So wird die Kontaktlage aus bis zu fünf Einzelschichten verschiedener Zusammensetzung und mit verschiedenen physikalischen Eigenschaften hergestellt. Die Schichten können mit Homopolymeren, Block-Copolymeren, Random-Copolymeren hergestellt als auch mit heterogenen Anteilen gemischt sein, beispielsweise mit Elastomeren, wie mit Naturkautschuk oder synthetischem Kautschuk.

Die Kontaktlage und deren Schichten, analog auch die Außenlage, können beispielsweise mit Gleitmitteln, Antiblockiermitteln, Antioxidantien, UV-Stabilisatoren und weiteren, bei der Technologier der Kunststoffverarbeitung bekannten Additiven, organischen und anorganischen Füllstoffen oder Pigmenten versehen sein, wobei übliche Mengen verwendbar sind.

Als Klebstoffschicht zwischen der Kontakt- und der Außenlage lassen sich handelsübliche Klebstoffe für die beiden Komponenten einsetzen, beispielsweise Klebstoffe auf Polyurethan-Basis, lösungsmittelhaltige oder lösungsmittelfreie oder ein- oder mehrkomponentige Klebstoffe und Haftvermittler, wie sie dem Fachmann an sich geläufig und wie sie handelsüblich sind. Verwiesen sei hier beispielsweise auf das Buch von W. Michaeli, "Einführung in die Kunststoffverarbeitung", 3. Auflage, Hanser-Verlag, 1992, Kapitel "Kleben von Kunststoffen".

Für die Außenlage gilt, daß diese vorzugsweise aus einem linearen Polyester, nämlich PBTP oder PETP, besteht. Es hat sich gezeigt, daß - technisch verwandt - auch PMMA verwendet werden kann. Die Außenlage kann vorzugsweise monoaxial oder biaxial orientiert sein. Als Schichtdicken haben sich als günstig erwiesen eine Schichtdicke der Kontaktlage zwischen 10 µm bis 750 µm, vorzugsweise zwischen 15 µm bis 500 µm, während die Außenlage eine Schichtdicke von 5 µm bis 100 µm, vorzugsweise zwischen 10 µm und 50 µm, haben sollte. Üblicherweise ist also die Außenlage dünner als die Kontaktlage.

Zur Herstellung einer derartigen Folie werden an sich bekannte Verfahrensschritte aus der Kunststoff-Technologie eingesetzt. Die ein- oder mehrschichtige Polypropylenlage wird entweder als Monofolie hergestellt oder aber - bei mehreren Schichten - coextrudiert, gegebenenfalls auch kalandriert. Um zum Verbund zu kommen, werden übliche Laminierverfahren, beispielsweise auch Extrusionskaschierverfahren mit Hilfe von Schichtdüsen, verwendet.

Wesentlich ist, daß die Dicken der Lagen für den Folienaufbau so gewählt werden, daß die Folie insbesondere Tiefzieh-Arbeitsvorgänge und Biegungen verträgt, ohne daß es zu Rißbildungen (Abrisse bzw. Biegerisse) kommt.

Das Aufbringen der Folie auf das Substrat erfolgt wie im Anspruch 21 definiert.

Es ist aber auch möglich, daß plane oder reliefierte Oberfläche des Substrates erforderlichenfalls mit einem Primer versehen wird und eine Folie, bei der eine äußere Schicht der Kontaktlage als Klebstoff ausgebildet ist, mit der Kontaktlage auf die Oberfläche des Substrates geklebt wird.

Es soll aber nicht ausgeschlossen sein, daß auch mit anderen Klebstoffen und Klebverfahren gearbeitet wird, die aus der Kunststoff-Technik bekannt sind.

Es zeigt sich, daß eine entsprechend zusammengestellte Folie nicht nur auf Bleche sondern auch auf anderen Substraten, wie Holz, Holzwerkstoffen, Karton, Papier, Kunststoffen oder keramischen Werkstoffen aufgebracht werden kann.

Die durch die Folie hergestellt Beschichtung ist stanzfähig, bieg- und tiefziehbar. Die an übliche Beschichtungen (Coatings) gestellten Anforderungen werden ohne weiteres realisiert. Hierzu gehört neben den eingangs genannten Eigenschaften auch Witterungsbeständigkeit, Sterilisierbarkeit und Unbedenklichkeit nach den verschiedenen Hygiene-Kriterien in in- und ausländischen, gesetzlichen und amtlichen Vorschriften (FDA, BGA, Lebensmittelbedarfgesetz).

Zusätzlich kann die Sichtseite der Folien vor oder nach dem Aufbringen auf ein Substrat auch noch mit einer schützenden und/oder dekorativen Lackschicht überzogen werden. Hierzu eignet sich beispielsweise ein ausgehärtetes Polykondensationsprodukt aus einem hydroxylgruppenhaltigen Polyester und einem Isocyanat ist. Als Isocyanat eignet sich insbesondere ein geblocktes aliphatisches Isocyanat. Die Dicke der ausgehärteten Lackschicht sollte etwa zwischen 3 und 30 µm liegen.

Der Lackschicht können ähnlich wie den anderen Lagen Füllstoffe und/oder Pigmente, insbesondere Weißpigmente, in einem erforderlichen, üblichen Anteil beigemischt sein.

Auch ist möglich, der Lackschicht noch synthetische Wachse zuzusetzen, um die Oberflächeneigenschaften (Glanz, Hydrophobie) zu verbessern.

Unter ökologischen und arbeitssicherheitstechnischen Gesichtspunkten ist hervorzuheben, daß während des Aufbringungsverfahrens der Folie keine Lösungsmittel- oder Erhitzungs-Dämpfe in die Umgebung entweichen.

Auch ist es möglich, dem Haftvermittler oder der Polypropylen-Schicht Korrosionsschutzmittel beizufügen.

Die Erfindung wird anhand von Beispielen erläutert.

### Beispiel 1 - Herstellung einer Folie für das Beschichten von Blech

In einem Mehrschichten-Flachfolienextruder wird eine dreischichtige Kontaktlage hergestellt, mit folgenden Lagenaufbau:
K Kontaktlage
   äußere Schicht farblos, Haftvermittler Polypropylen, welches mit Maleinsäureanhydrid gepfropft ist;
   mittlere Schicht PP-Blockcopolymer mit 9 Gew.-% TiO2 weiß gefärbt;
   innere Schicht (an die Klebstoffschicht angrenzend)
   farbloses PP-Blockcopolymer
Die Gesamtdicke der Kontaktlage beträgt 70 µm.
A Außenlage
   Die Außenlage bildet eine Folie aus PETP des Typs Melinex (ICI) mit einer Dicke von 10 µm.

Die beiden Lagen A und K werden mit einem Polyurethanklebstoff (Schichtdicke vor dem Verkleben 7 µm) unter Druckeinwirkung verklebt.

Die vorgenannte Folie wird mit Hilfe eines auf ein chromatiertes, gereinigtes Schwarzblech aufgebrachten Primers (Lieferant BASF) bei einer Temperatur von 230°C mit ihrer Kontaktlage unter einem Lineardruck von 1000 N/cm² auf das Substrat aufgepreßt.

Die weiteren in den Ansprüchen genannten Substanzen können entsprechend Beispiel 1 mutatis mutandis eingesetzt werden.

### Beispiel 2

Eine Folie der in Beispiel 1 genannten Art wird mit einer doppelten Lackschicht versehen, wobei als erste Lackschicht als "Primerschicht" beispielsweise ein Strukturlack-Schicht von 7 µm Dicke oder ein glatter Lack von etwa gleicher Dicke auf Basis eines ausgehärteten Polykondensationsproduktes aus einem hydroxylgruppenhaltigen, gesättigten, ölfreien Polyester verwendet wird, der mit einem geblockten aliphatischen Isocyanat kombiniert wird. Die Filmbildung erfolgt durch an sich bekannte Polyadditionsreaktionen der Hydroxylgruppen mit dem Isocyanat oberhalb einer Temperatur von 230 °C. Der Lackschicht können Weißpigmente und Korrosionsschutzpigmente in üblicher, verträglicher Menge beigefügt werden.

Unter "Struckturlacken" werden solche verstanden, die eine gewisse dreidimensionale Struktur durch eingemischte oder eingebaute Granulate oder dergleichen bewirken.

Die vorgenannte erste Lackschicht wird vorzugsweise mit einer zweiten Lackschicht (Decklack) von etwa 20 µm Dicke überschichtet. Auch hier handelt es sich vorzugsweise um hydroxylgruppenhaltige, gesättigte, ölfreie Polyester in Kombination mit geblockten aliphatischen Isocyanaten, wobei der Lack härtet durch entsprechend bekannte Polyadditionsreaktionen oberhalb von 230°C.

Es kann hier mit Hilfe von Weißpigmenten auf der Basis von Titandioxyd eine Weißfärbung erfolgen. Es sollen aber andere Farbtöne mit geigneten Farben nicht ausgeschlossen werden.

Zu Verbesserung der Oberflächeneigenschaften, wie Glanz, Hydrophobie, werden synthetische Wachse zugesetzt. Hierbei handelt es sich beispielsweise um Polyalkylenwachse oder Polyethylenglycolwachse.

Als Klebstoffe kommen solche in Frage, die auf Basis von Polyolefinen und Reaktionsharzen hergestellt sind, letztere vorzugsweise aus der Gruppe von Polyestern, Polyesterurethanen, Acrylaten oder Epoxyharzen. Diese Reaktionsharze werden vorzugsweise durch Isocyanate, Amine, Melamin- oder Phenolharze vernetzt.

Es ergeben sich halogen-, insbesondere chlorfreie Produkte, die mit einer Auftragsstärke von 5 - 20 µm appliziert werden. Die Vernetzung wird bei einer Trocknungstemperatur oberhalb 120° C eingeleitet. Die Klebstoffe können sowohl transparent als auch pigmentiert sein oder aber mit einem Korrosionsinhibitor versehen eingesetzt werden.

## Patentansprüche

1. "Folie zur permanenten Beschichtung von Substraten, mit folgendem Folienschichtaufbau:
- eine mit dem Subtrat zu verbindenden Kontaktlage K bestehend aus drei bis fünf Einzelschichten aus verschiedenen Polypropylenen oder Propylen-Olefin-Copolymeren,
- eine Außenlage A aus PMMA oder linearem Polyester,
- eine zwischen der Lagen K und A angeordnete Klebstoffschicht G,
wobei das Dickenverhältnis K:A 25:1 bis 0,5:1 und die Gesamtdicke K+G+A 20 bis 1000 µm betragen, und die Kontaktlage K aus mindestens
- einer äußeren Haftvermittlerschicht auf der Basis von Polyolefinen oder Reaktionsharzen,
- einer mittleren Schicht aus einem Propylen-Olefin-Mischpolymerisat und
- einer inneren, an der Klebstoffschicht G angrenzenden Schicht aus farblosen Propylencopolymer, besteht."

2. Folie nach Anspruch 1, **dadurch gekennzeichnet, daß** wenigstens eine der Einzelschichten der Kontaktlage K ein Polypropylen mit einem Anteil an Elastomeren, wie natürlichen oder synthetischen Kautschuken, enthält.

3. Folie nach Anspruch 1 oder 2, **dadurch gekennzeichnet, daß** wenigstens eine der Einzelschichten der Kontaktlage K Füller und/oder Pigmente und/oder für Kunststoffe übliche Additive enthält.

4. Folie nach Anspruch 1, **dadurch gekennzeichnet, daß** die Reaktionsharze der Haftvermittlerschicht aus der Gruppe von Polyestern, Polyesterurethanen, Acrylaten oder Epoxyharzen, gewählt sind.

5. Folie nach Anspruch 1, **dadurch gekennzeichnet, daß** die Reaktionsharze der Haftvermittlerschicht durch Isocyanate, Amine, Melamin- oder Phenolharze vernetzt sind.

6. Folie nach einem der Ansprüche 1 bis 5, **dadurch gekennzeichnet, daß** die Klebstoffe transparent oder pigmentiert und/oder mit einem Korrosionsinhibitor versehen ist.

7. Folie nach Anspruch 1, **dadurch gekennzeichnet, daß** die Außenlage A monoaxial oder biaxial orientiert ist.

8. Folie nach Anspruch 1 oder 7, **dadurch gekennzeichnet, daß** die Außenlage A aus Polyethylenterephtalat oder Polybutylenterephtalat besteht.

9. Folie nach einem der vorhergehenden Ansprüche, **dadurch gekennzeichnet, daß** die Außenlage A mit einer Lackschicht überzogen ist.

10. Folie nach Anspruch 9, **dadurch gekennzeichnet, daß** die Sichtseite der Außenlage A mit einer Lackschicht überzogen ist, die ein ausgehärtetes Polykondensationsprodukt aus einem hydroxylgruppenhaltigen Polyester und einem Isocyanat ist.

11. Folie nach Anspruch 10, **dadurch gekennzeichnet, daß** das Isocyanat ein geblocktes aliphatisches Isocyanat ist.

12. Folie nach Anspruch 9, **dadurch gekennzeichnet, daß** die Dicke der ausgehärteten Lackschicht zwischen 3 und 30 µm ist.

13. Folie nach einem der Ansprüche 9 bis 12, **dadurch gekennzeichnet, daß** die Lackschicht Füllstoffe und/oder Pigmente, in einem üblichen Anteil enthält.

14. Folie nach Anspruch 13, **dadurch gekennzeichnet, daß** die Lackschicht Weißpigmente in einem üblichen Anteil enthält.

15. Folie nach einem der vorhergehenden Ansprüche 10 bis 12, **dadurch gekennzeichnet, daß** der Lackschicht synthetische Wachse zugesetzt sind.

16. Beschichtetes Substrat, **dadurch gekennzeichnet, daß** das Substrat mit einer Folie nach einem der Ansprüche 1 bis 15 auf wenigstens einer Seite überzogen ist.

17. Beschichtetes Substrat nach Anspruch 16, **dadurch gekennzeichnet, daß** das Substrat ein Metallblech ist.

18. Beschichtetes Substrat nach Anspruch 16, **dadurch gekennzeichnet, daß** das Substrat Holz, ein Holzwerkstoff, Karton oder Papier ist.

19. Beschichtetes Substrat nach Anspruch 16, **dadurch gekennzeichnet, daß** das Substrat aus Kunststoff besteht.

20. Beschichtetes Substrat nach Anspruch 16, **dadurch gekennzeichnet, daß** das Substrat ein keramischer Werkstoff, beispielsweise gebrannter Ton, oder Glas ist.

21. Verfahren zur Beschichtung eines Substrates mit einer Folie, **dadurch gekennzeichnet, daß** auf eine staub- und fettfreie, plane oder reliefierte Oberfläche des Substrates eine Folie nach einem der Ansprüch 1 bis 15, mit auf eine Schmelztemperatur des Polypropylen erwärmter Kontaktlage auf die Oberfläche des Substrates aufgedrückt wird.

## Claims

1. Film for the permanent coating of substrates, having the following film layer structure:
- a contact layer K to be bonded to the substrate and consisting of three to five individual layers of various polypropylenes or propylene-olefin copolymers,
- an outer layer A of PMMA or linear polyester,
- an adhesive layer G arranged between the layers K and A,
in which the thickness ratio K : A is 25 : 1 to 0.5 : 1 and the overall thickness K+G+A is 20 to 1000 µm, and the contact layer K consists of at least
- an outer coupling layer based on polyolefins or reaction resins,
- a middle layer of a propylene-olefin copolymer, and
- an inner layer adjoining the adhesive layer G and consisting of colourless propylene copolymer.

2. Film according to claim 1, **characterised in that** at least one of the individual layers of the contact layer K contains a polypropylene with a proportion of elastomers such as natural or synthetic rubbers.

3. Film according to claim 1 or 2, **characterised in that** at least one of the individual layers of the contact layer K contains fillers and/or pigments and/or conventional additives for plastics.

4. Film according to claim 1, **characterised in that** the reaction resins of the coupling agents are selected from the group comprising polyesters, polyester urethanes, acrylates or epoxy resins.

5. Film according to claim 1, **characterised in that** the reaction resins of the coupling agents are crosslinked by isocyanates, amines, melamine resins or phenolic resins.

6. Film according to one of claims 1 to 5, **characterised in that** the adhesives are transparent or pigmented and/or are provided with a corrosion inhibitor.

7. Film according to claim 1, **characterised in that** the outer layer A is oriented monoaxially or biaxially.

8. Film according to claim 1 or 7, **characterised in that** the outer layer A consists of polyethylene terephthalate or polybutylene terephthalate.

9. Film according to one of the preceding claims, **characterised in that** the outer layer A is coated with a lacquer layer.

10. Film according to claim 9, **characterised in that** the visible side of the outer layer A is coated with a lacquer layer that is a hardened polycondensation product of an hydroxyl group-containing polyester and an isocyanate.

11. Film according to claim 10, **characterised in that** the isocyanate is a blocked aliphatic isocyanate.

12. Film according to claim 9, **characterised in that** the thickness of the hardened lacquer layer is between 3 and 30 µm.

13. Film according to one of claims 9 to 12, **characterised in that** the lacquer layer contains fillers and/or pigments in conventional amounts.

14. Film according to claim 13, **characterised in that** the lacquer layer contains white pigments in conventional amounts.

15. Film according to one of the preceding claims 10 to 12, **characterised in that** synthetic waxes are added to the lacquer layer.

16. Coated substrate, **characterised in that** the substrate is coated on at least one side with a film according to one of claims 1 to 15.

17. Coated substrate according to claim 16, **characterised in that** the substrate is a metal sheet.

18. Coated substrate according to claim 16, **characterised in that** the substrate is wood, a wood material, cardboard or paper.

19. Coated substrate according to claim 16, **characterised in that** the substrate consists of plastics material.

20. Coated substrate according to claim 16, **characterised in that** the substrate is a ceramic material, for example fired clay, or glass.

21. Process for the coating of a substrate with a film, **characterised in that** a film according to one of claims 1 to 15 is pressed with a contact layer heated to the melting point of propylene onto a dust-free and grease-free plane or relief surface of the substrate.

## Revendications

1. Feuille de revêtement permanent de substrat qui comprend la structure suivante de couches de feuille:
- une strate de contact K à attacher au substrat, composée de trois à cinq couches individuelles en divers polypropylènes ou copolymères propylène-oléfine,
- une strate externe A en PMMA ou en polyester linéaire,
- une couche d'adhésif G agencée entre les couches K et A,
dans laquelle le rapport K:A entre les épaisseurs est de 25:1 à 0,5:1 et l'épaisseur totale K + G + A est de 20 à 1000 µm, et la strate de contact K se compose d'au moins
- une couche d'agent adhésif externe à base de polyoléfines ou de résines composites,
- une couche intermédiaire en un polymérisat mélangé de propylènes et d'oléfines, et
- une couche interne adjacente à la couche d'adhésif G en copolymères incolores de propylènes.

2. Feuille selon la revendication 1, **caractérisée en ce qu'**au moins l'une des couches individuelles de la strate de contact K contient un propylène comprenant un pourcentage d'élastomères, par exemple des caoutchoucs naturels ou synthétiques.

3. Feuille selon la revendication 1 ou 2, **caractérisée en ce qu'**au moins l'une des couches individuelles de la strate de contact K contient des charges et/ou des pigments et/ou des additifs habituels pour matières plastiques.

4. Feuille selon la revendication 1, **caractérisée en ce que** les résines composites de la couche d'agent adhésif sont choisies dans le groupe constitué par des polyesters, des polyester-uréthanes, des acrylates ou des résines époxy.

5. Feuille selon la revendication 1, **caractérisée en ce que** les résines composites de la couche d'agent adhésif sont réticulées par des isocyanates, des amines, des résines de mélamine ou de phénol.

6. Feuille selon l'une quelconque des revendications 1 à 5, **caractérisée en ce que** les adhésifs sont transparents ou colorés et/ou incluent un inhibiteur de corrosion.

7. Feuille selon la revendication 1, **caractérisée en ce que** la strate externe A est à orientation monoaxiale ou biaxiale.

8. Feuille selon la revendication 1 ou 7, **caractérisée en ce que** la strate externe A se compose de polytétéréphtalate d'éthylène ou de polytéréphtalate de butylène.

9. Feuille selon l'une quelconque des revendications précédentes, **caractérisée en ce que** la strate externe A est revêtue d'une couche de vernis.

10. Feuille selon la revendication 9, **caractérisée en ce que** le côté visible de la strate externe A est revêtu d'une couche de vernis qui se compose d'un produit durci de polycondensation d'un polyester contenant des groupes hydroxyle et d'un isocyanate.

11. Feuille selon la revendication 10, **caractérisée en ce que** l'isocyanate est un isocyanate aliphatique séquencé.

12. Feuille selon la revendication 9, **caractérisée en ce que** l'épaisseur de la couche de vernis durcie est comprise entre 3 et 30 µm.

13. Feuille selon l'une quelconque des revendications 9 à 12, **caractérisée en ce que** la couche de vernis contient un pourcentage habituel de charges et/ou de pigments.

14. Feuille selon la revendication 13, **caractérisée en ce que** la couche de vernis contient un pourcentage habituel de pigments blancs.

15. Feuille selon l'une quelconque des revendications 10 à 12, **caractérisée en ce que** des cires synthétiques sont ajoutées à la couche de vernis.

16. Substrat revêtu, **caractérisé en ce que** le substrat est revêtu, au moins sur l'un de ses côtés, d'une feuille selon l'une quelconque des revendications 1 à 15.

17. Substrat revêtu selon la revendication 16, **caractérisé en ce que** le substrat est une tôle métallique.

18. Substrat revêtu selon la revendication 16, **caractérisé en ce que** le substrat est en bois, en matériau dérivé du bois, en carton ou en papier.

19. Substrat revêtu selon la revendication 16, **caractérisé en ce que** le substrat se compose de matière plastique.

20. Substrat revêtu selon la revendication 16, **caractérisé en ce que** le substrat est une matière céramique, par exemple de l'argile cuite ou du verre.

21. Procédé de revêtement d'un substrat au moyen d'une feuille, **caractérisé en ce qu'**une feuille conforme à l'une quelconque des revendications 1 à 15 est appliquée par compression sur une surface du substrat exempte de poussières et de matières grasses, plane ou en relief, à une température de fusion de la strate de contact en propylène chauffée sur la surface de substrat.
